# EUROPÄISCHE PATENTANMELDUNG

(11) **EP 3 527 723 A1**
(43) Veröffentlichungstag der Anmeldung: **21.08.2019**
(21) Anmeldenummer: 18157687.7
(22) Anmeldetag: 20.02.2018
(51) Int. Cl.: E02D 3/12, B09C 1/08

(54) **VERFAHREN ZUM BEARBEITEN EINES BODENS UND FRÄSKOPF HIERFÜR**

(71) Anmelder: BAUER Maschinen GmbH, 86529 Schrobenhausen (DE)
(72) Erfinder: HERRMANN, Christian, 86551 Aichach (DE); WEIXLER, Leonhard, 86672 Thierhaupten (DE); BEIER, Christoph Johannes, 86529 Schrobenhausen (DE)
(74) Vertreter: Wunderlich & Heim Patentanwälte Partnerschaftsgesellschaft mbB

(57) **Zusammenfassung**

Die Erfindung betrifft ein Verfahren zum Bearbeiten eines Bodens mit einem Fräskopf, welcher mittels eines Auslegerarms, welcher an einem Arbeitsgerät angeordnet ist, durch einen Bodenbereich verschwenkt wird, wobei der Fräskopf ein erstes Fräsrad und ein zweites Fräsrad aufweist, welche um eine gemeinsame Drehachse drehend angetrieben werden. Gemäß der Erfindung ist vorgesehen, dass beim Bearbeiten des Bodenbereichs das erste Fräsrad in eine erste Drehrichtung und das zweite Fräsrad in eine zweite Drehrichtung angetrieben werden, welche entgegengesetzt zu der ersten Drehrichtung ist. Die Erfindung umfasst weiterhin einen Fräskopf für das Verfahren.

## Beschreibung

Die Erfindung betrifft ein Verfahren zum Bearbeiten eines Bodens mit einem Fräskopf, welcher mittels eines Auslegerarms, welcher an einem Arbeitsgerät angeordnet ist, durch einen Bodenbereich verschwenkt wird, wobei der Fräskopf ein erstes Fräsrad und ein zweites Fräsrad aufweist, welche um eine gemeinsame Drehachse drehend angetrieben werden, gemäß dem Oberbegriff des Anspruchs 1.

Weiterhin betrifft die Erfindung einen Fräskopf mit einem mittigen Gehäuse, an welchem an einer ersten Seite ein erstes Fräsrad und an einer gegenüberliegenden Seite ein zweites Fräsrad drehbar um eine gemeinsame Drehachse gelagert sind, und eine Antriebseinrichtung zum drehenden Antreiben der Fräsräder, gemäß dem Oberbegriff des Anspruchs 6.

Ein gattungsgemäßes Verfahren zum Bearbeiten eines Bodens durch Verschwenken eines Fräskopfes an einem Auslegerarm geht aus der DE 698 19 999 T2 hervor. Bei diesem bekannten Verfahren wird ein oberflächlicher Bodenbereich in einem vorgegebenen Areal abgefräst. Das abgefräste Bodenmaterial kann dabei in situ mit einem Zusatzmaterial vermischt werden. Bei diesem zusätzlichen Material kann es sich beispielsweise um Zement handeln, so dass in dem Bodenbereich eine lasttragende Bodenplatte unter Verwendung des abgetragenen Bodenmaterials erzeugt wird. Es können auch andere Zusatzmaterialien in den Boden eingearbeitet werden, beispielsweise Mikroben für einen gezielten Schadstoffabbau in einem kontaminierten Bodenbereich.

Bei dem bekannten Verfahren wird ein Fräskopf mit einem Paar von Fräsrädern verwendet. Die beiden Fräsräder sind dabei um eine gemeinsame Drehachse in gleicher Drehrichtung drehend angetrieben.

Aus der WO 00/75488 A1 geht ein Fräskopf hervor, wie er beispielsweise für das zuvor beschriebenen Verfahren eingesetzt werden kann. An einem mittigen Getriebeschild sind zu beiden Seiten je ein Fräsrad angeordnet, welche über einen gemeinsamen Antriebsmotor angetrieben werden. Über ein Getriebe im Getriebeschild werden die Fräsräder in der gleichen Drehrichtung angetrieben.

Der Erfindung liegt die **Aufgabe** zugrunde, ein Verfahren zum Bearbeiten des Bodens und einen Fräskopf hierzu anzugeben, mit welchen eine besonders effiziente Bodenbearbeitung ermöglicht ist.

Die Aufgabe wird nach der Erfindung durch ein Verfahren mit den Merkmalen des Anspruchs 1 und durch einen Fräskopf mit den Merkmalen des Anspruchs 6 gelöst. Bevorzugte Ausführungsformen der Erfindung sind in den jeweils abhängigen Ansprüchen angegeben.

Das erfindungsgemäße Verfahren ist dadurch gekennzeichnet, dass beim Bearbeiten des Bodenbereichs das erste Fräsrad in eine erste Drehrichtung und das zweite Fräsrad in eine zweite Drehrichtung angetrieben werden, welche entgegengesetzt zu der ersten Drehrichtung ist.

Gemäß einer Grundidee der Erfindung werden beim Bearbeiten des Bodens die beiden Fräsräder in unterschiedliche Drehrichtungen angetrieben. Normalerweise ist beim Abfräsen von Bodenmaterial mit nur einem Fräsradpaar ein Antreiben der Fräsräder in unterschiedlichen Drehrichtungen unerwünscht, da hierdurch ein unerwünschtes Querdrehmoment auf den Fräskopf ausgeübt wird. Dies führt bei einer Schwenkbewegung quer zur Drehachse und quer zu einer Längsachse des Fräskopfs zu einer Belastung des Fräskopfes, des Auslegerarms und des Arbeitsgerätes insgesamt.

Allerdings wird bei dem erfindungsgemäßen Verfahren eine erhöhte Belastung gezielt in Kauf genommen, da durch die unterschiedliche Drehrichtung der beiden Fräsräder ein zusätzlicher und vorteilhafter Mischeffekt bei dem abgefrästen Bodenmaterial erreicht wird. Zudem wird das erfindungsgemäße Verfahren insbesondere zur Bodenverbesserung und zur Erhöhung der Tragfestigkeit von Böden bei Gründungsmaßnahmen eingesetzt. Bei derartigen Böden besteht nur eine geringe Festigkeit des Bodens, so dass auch nur relativ geringe Querdrehmomente beim Verschwenken auf den Fräskopf ausgeübt werden.

Eine bevorzugte Ausführungsform des erfindungsgemäßen Verfahrens besteht darin, dass während des Bearbeitens des Bodenbereichs ein Zusatzmaterial in den Bodenbereich eingeleitet und mit dem abgefrästen Bodenmaterial vermischt wird. Je nach Einsatzzweck kann das Zusatzmaterial zur Verfestigung des Bodenbereichs, etwa zur Durchführung einer Gründungsmaßnahme vorgesehen sein. Es können auch chemische oder biologische Stoffe in den Boden eingebracht werden, die etwa einen Schadstoffabbau begünstigen. Dies können auch mikrobiologische Substanzen sein.

Grundsätzlich kann das Zusatzmaterial pulverförmig sein. Eine bevorzugte Ausführungsvariante besteht nach der Erfindung darin, dass als Zusatzmaterial ein Fluid verwendet wird, welches im Bereich der Fräsräder eingeleitet wird. Das Fluid kann dabei eine Flüssigkeit, eine Suspension oder ein Gas sein. Vorzugsweise kann eine Bindemittelsuspension, insbesondere eine Zementsuspension, in den Bodenbereich eingeleitet und durch die Fräsräder mit dem abgefrästen Bodenmaterial vermischt werden. Durch die unterschiedliche Antriebsrichtung der Fräsräder wird dabei in besonders guter Mischeffekt insbesondere auch in Querrichtung zu den Fräsrädern erzielt.

Eine besondere gute Mischwirkung wird nach einer Weiterbildung des erfindungsgemäßen Verfahrens dadurch erzielt, dass das Fluid im Bereich des ersten Fräsrades mit einer ersten Einspritzeinrichtung eingeleitet wird, bei welcher eine erste Einspritzrichtung etwa tangential an das erste Fräsrad in der ersten Drehrichtung gerichtet ist, und dass das Fluid im Bereich des zweiten Fräsrades mit einer zweiten Einspritzeinrichtung eingeleitet wird, bei welcher eine zweite Einspritzrichtung etwa tangential zum zweiten Fräsrad in der zweiten Drehrichtung gerichtet ist. Hierdurch werden durch die Einspritzeinrichtungen, welche jeweils eine oder mehrere Einspritzdüsen aufweisen, das Fluid unmittelbar in den mechanischen Mischbereich an den Fräsrädern eingeleitet. Durch diese spezielle Einspritzung wird zudem der zusätzliche Vorteil erzielt, dass an den Fräsrädern angeordnete Schneidzähne von anhaftendem Bodenmaterial freigespült werden können. Dies kann insbesondere dadurch erzielt werden, dass das Fluid mit einem erhöhten Druck, insbesondere von 2 bis 50 bar in den Bereich der Fräsräder eingespritzt wird.

Weiterhin ist es nach einer Ausführungsvariante der Erfindung vorteilhaft, dass beim Bearbeiten der Fräskopf in eine horizontale und eine vertikale Richtung durch den Auslegerarm verschwenkt wird. Bei dem erfindungsgemäßen Verfahren steht ein Arbeitsgerät auf einer Bodenoberfläche, wobei mit einem Auslegerarm, an dessen Ende der Fräskopf mit den beiden Fräsrädern angeordnet ist, durch den Bodenbereich verschwenkt wird, wobei eine horizontale Bearbeitungsfläche überstrichen wird. Das Verschwenken kann in allen horizontalen Richtungen und auch in vertikaler Richtung erfolgen. Vorzugsweise ist das Verschwenken etwa bogenförmig.

Der erfindungsgemäße Fräskopf ist dadurch gekennzeichnet, dass die Antriebseinrichtung ausgebildet ist, das erste Fräsrad in einer ersten Drehrichtung und das zweite Fräsrad in einer zweiten Drehrichtung anzutreiben, welche entgegengesetzt zu der ersten Drehrichtung ist. Der erfindungsgemäße Fräskopf kann insbesondere zur Durchführung des zuvor beschriebenen Verfahrens eingesetzt werden, wobei sich die damit beschriebenen Vorteile ergeben.

Eine bevorzugte Ausführungsform der Erfindung besteht darin, dass die Antriebseinrichtung einen gemeinsamen Antriebsmotor für die beiden Fräsräder aufweist. Der Antriebsmotor ist dabei insbesondere mittig in dem Gehäuse, insbesondere einem Gehäuseschild angeordnet. Grundsätzlich kann auch ein separater Antrieb für jedes der Fräsräder vorgesehen sein, wobei die einzelnen Antriebsmotoren vorzugsweise als Nabenmotoren in den Naben der Fräsräder angeordnet sind.

Der Antriebsmotor kann in einer beliebigen Weise ausgestaltet sein. Der Antrieb kann etwa ein Elektroantrieb sein. Eine besonders kompakte und leistungsstarke Antriebsanordnung wird nach einer Weiterbildung der Erfindung dadurch erzielt, dass der Antriebsmotor als ein hydraulischer Antriebsmotor ausgebildet ist. Die Versorgung mit Hydraulikfluid kann insbesondere durch entsprechende Leitungen durch den Auslegerarm von dem Arbeitsgerät erfolgen.

Nach einer Weiterbildung der Erfindung ist es zudem bevorzugt, dass die Antriebseinrichtung ein Getriebe mit einer einzelnen Antriebswelle und zwei Abtriebswellen aufweist, wobei ein Antriebsdrehmoment des Antriebsmotors durch das Getriebe von der Antriebswelle auf die beiden Abtriebswellen mit entgegengesetzten Drehrichtungen aufteilbar ist. Dabei ist ein gemeinsamer Antriebsmotor mit einer üblicherweise vertikal gerichteten Antriebswelle vorgesehen. Über eine entsprechende Kegelradstufe kann das Antriebsdrehmoment auf die vorzugsweise horizontalen, üblicherweise orthogonal zur Antriebswelle angeordneten Abtriebswellen übertragen werden. An den Abtriebswellen ist jeweils ein Fräsrad angeordnet. Das Getriebe ist dabei insgesamt so ausgebildet, dass die beiden Abtriebswellen mit unterschiedlichen Drehrichtung angetrieben werden.

Für einen besonders guten Mischeffekt beim Betrieb des Fräskopfes ist es nach einer Weiterbildung vorgesehen, dass im Bereich des ersten Fräsrades mindestens eine erste Einspritzeinrichtung zum Einspritzen eines Fluids und im Bereich des zweiten Fräsrades mindestens eine zweite Einspritzeinrichtung zum Einspritzen eines Fluids angeordnet sind, wobei die erste Einspritzeinrichtung etwa entgegengesetzt zu der zweiten Einspritzeinrichtung gerichtet ist. Die Fluide an den Fräsrädern können grundsätzlich unterschiedlich sein. Bevorzugt ist jedoch, dass über eine gemeinsame Fluidzuführung etwa vom Arbeitsgerät über den Auslegerarm ein gemeinsames Fluid oder auch ein sonstiges Zusatzmaterial zu den beiden Fräsrädern zugeführt wird. Die Zuführung erfolgt dabei jeweils in Drehrichtung an die Außenseite der vorzugsweise zylindrischen Fräsräder, an deren Außenseiten Abtragszähne zum Abtragen von Bodenmaterial angeordnet sind.

Durch diese Einspritzrichtung wird ein besonders guter Mischeffekt und gleichzeitig auch ein Freispülen der Abtragszähne von eventuell anhaftendem Bodenmaterial bewirkt.

Die Erfindung betrifft weiterhin ein Arbeitsgerät mit einem verschwenkbaren Auslegerarm, welcher dadurch gekennzeichnet ist, dass an dem Auslegerarm der zuvor beschriebene erfindungsgemäße Fräskopf angebracht ist. Der Auslegerarm kann dabei zwei oder mehr Teilarme aufweisen, die gelenkig miteinander verbunden sind. Ein Verschwenken des Fräskopfes am Auslegerarm erfolgt in grundsätzlich bekannter Weise vorzugsweise durch Hydraulikzylinder an dem Auslegerarm.

Nach einer Weiterbildung ist es zudem vorteilhaft, dass das Arbeitsgerät einen verfahrbaren Unterwagen aufweist, auf welchem ein horizontal drehbarer Oberwagen mit dem Auslegerarm gelagert ist. Der Unterwagen kann insbesondere ein Raupenfahrwerk sein. Am Oberwagen ist vorzugsweise eine Fahrerkabine zum Bedienen des Gerätes angeordnet. An dem drehbar gelagerten Oberwagen ist der Auslegerarm über ein horizontal gerichtetes Schwenkgelenk verschwenkbar angebracht. Die Schwenkbewegung des Auslegerarms beim Bearbeiten des Bodens erfolgt insbesondere in einer Längsrichtung des Oberwagens und des Auslegerarms von dem Oberwagen weg und/oder auf den Oberwagen zu.

Die Erfindung wird nachfolgend anhand von bevorzugten Ausführungsbeispielen weiter beschrieben, welche in den beigefügten Zeichnungen schematisch dargestellt sind. In den Zeichnungen zeigen:
- Fig. 1: eine perspektivische Ansicht eines erfindungsgemäßen Arbeitsgeräts;
- Fig. 2: eine Seitenansicht des Arbeitsgeräts von Fig. 1 in einer ersten Bearbeitungsposition;
- Fig. 3: eine Seitenansicht des Arbeitsgeräts von den Figuren 1 und 2 in einer zweiten Bearbeitsposition;
- Fig. 4: eine schematische perspektivische Ansicht zur Ausbildung des Fräskopfes; und
- Fig. 5: eine schematische Querschnittsansicht des Fräskopfes von Fig. 4 in einem vergrößerten Maßstab.

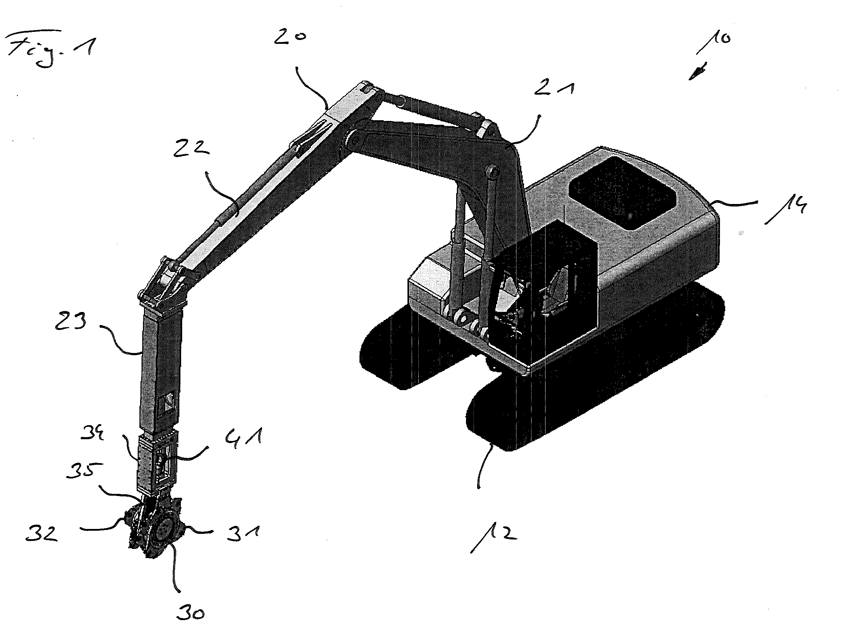

Ein erfindungsgemäßes Arbeitsgerät 10 gemäß Fig. 1 weist einen Unterwagen 12 auf, welcher als ein Raupenfahrwerk ausgebildet ist. Auf dem Unterwagen 12 ist um eine vertikale Mittenachse drehbar gelagert ein Oberwagen 14 mit einer Fahrerkabine angeordnet. An einer Vorderseite des Oberwagens 14 ist ein Auslegerarm 20 schwenkbar angelenkt.

Der Auslegerarm 20 weist im dargestellten Ausführungsbeispiel einen ersten Arm 21, einen mittleren zweiten Arm 22 und einen dritten Arm 23 auf, welche jeweils über Schwenkgelenke schwenkbar miteinander verbunden sind. In bekannter Weise sind die einzelnen Arme 21, 22 und 23 mittels Hydraulikzylindern um die im Wesentlichen horizontal gerichteten Schwenkgelenke schwenkbar miteinander verbunden. Der erste Arm 21 des Auslegerarms 20 ist über eine Doppelzylinderanordnung um eine horizontal gerichtete Schwenkachse verstellbar am Oberwagen 14 gelagert. Am freien Ende des dritten Arms 23 des Auslegerarms 20 ist ein erfindungsgemäßer Fräskopf 30 angebracht.

Der erfindungsgemäße Fräskopf 30 weist ein kastenartiges Gehäuse 34 mit einem am unteren Bereich angebrachten plattenartigen Getriebeschild 35 auf. In dem kastenförmigen Gehäuse 34 ist ein Antriebsmotor 41 untergebracht, welcher als ein Hydraulikmotor ausgebildet ist. Über innerhalb des Auslegerarms 20 verlaufende Hydraulikleitungen ist der Antriebsmotor 41 an das Hydraulikaggregat des Arbeitsgerätes 10 im Oberwagen 14 angeschlossen. An dem unteren Getriebeschild 35 sind zu beiden Seiten ein erstes Fräsrad 31 und ein zweites Fräsrad 32 drehbar gelagert. Die Fräsräder 31, 32 weisen an ihrem Außenumfang Abtragszähne zum Abtragen von Bodenmaterial auf.

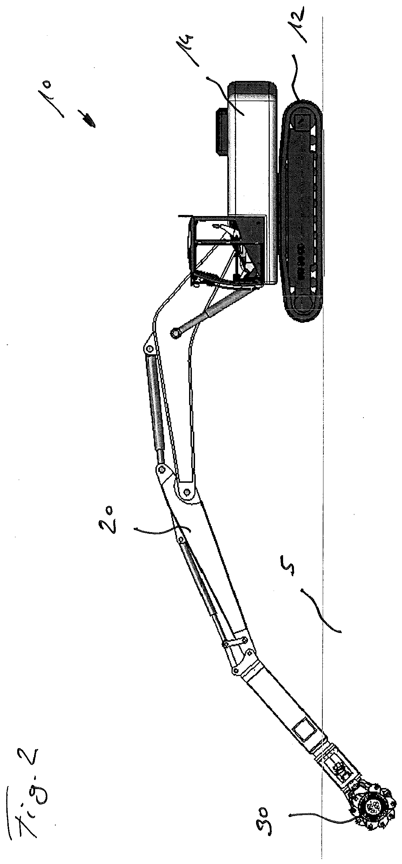

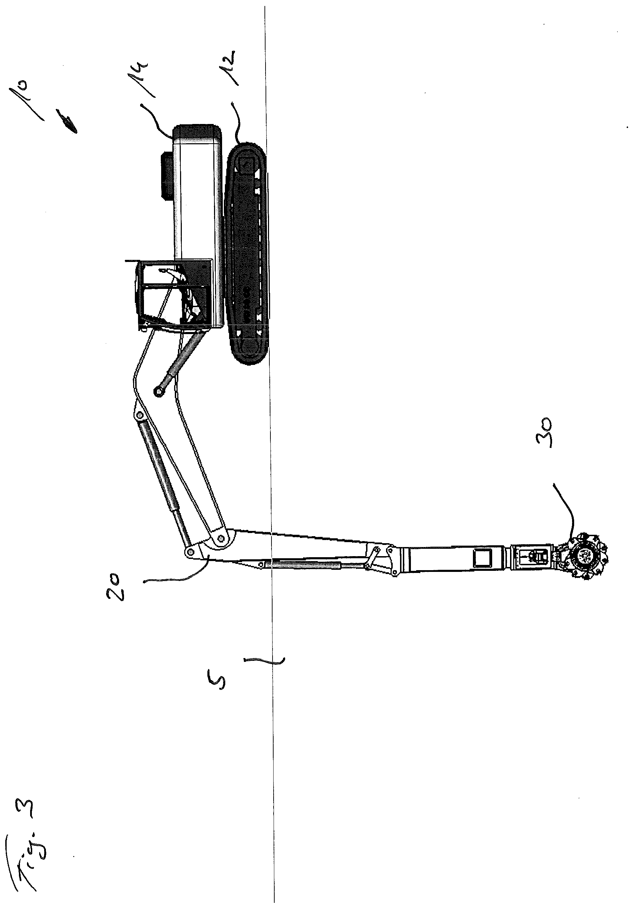

Zum Bearbeiten des Bodens wird der Fräskopf 30 mit dem Auslegerarm 20 in einer Längsrichtung zum Oberwagen 14 und zum Auslegerarm 20 durch einen Bodenbereich 5 verschwenkt. Aufgrund der drehenden Fräsräder 31, 32 wird Bodenmaterial des Bodenbereichs 5 abgetragen. Hierdurch kann der Fräskopf 30 durch den Bodenbereich 5 hindurchbewegt werden, wie anschaulich in den Figuren 2 und 3 dargestellt ist.

Während des Abtragens des Bodenmaterials wird über eine nicht näher dargestellte Einspritzeinrichtung am Fräskopf 30 ein Zusatzmaterial, insbesondere eine Fluid, in den Bereich der Fräsräder 31, 32 eingespritzt. Durch die rotierenden Fräsräder 31, 32 wird das Zusatzmaterial insitu mit dem abgefrästen Bodenmaterial vermengt. Auf diese Weise kann durch das Verschwenken des Auslegerarm 20 bei rotierenden Fräsrädern 31, 32 abgefrästes Bodenmaterial etwa mit einer Zementsuspension vermengt werden, um so einen Bodenbereich 5 mit erhöhter Tragfähigkeit auszubilden. Durch mehrmaliges Verschwenken des Fräskopfs 30 durch den bereits gefrästen Bodenbereich kann eine verbesserte Mischung erzielt werden.

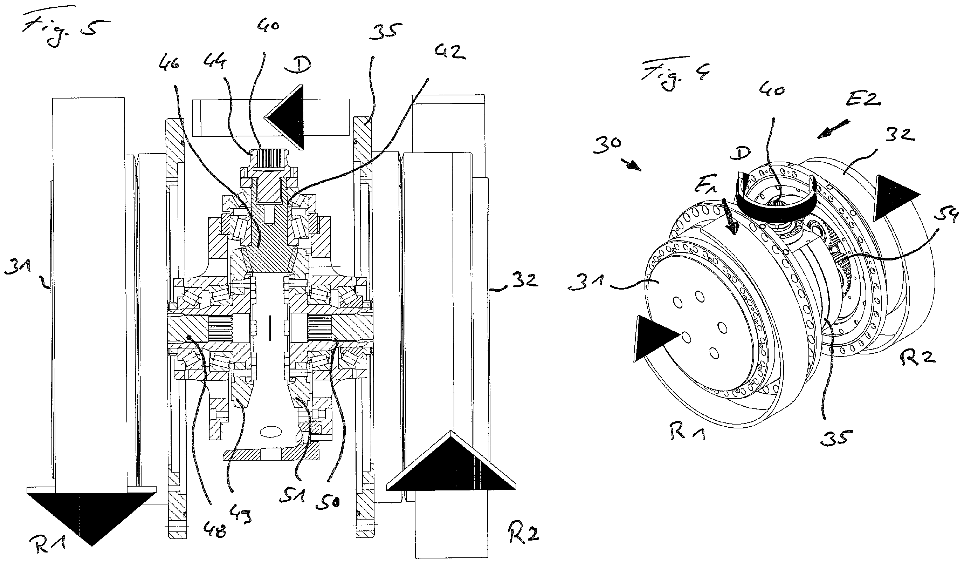

Bei dem erfindungsgemäßen Fräskopf 30, wie er schematisch unter Weglassung des Kranzes von Abtragszähnen an den Fräsrädern 31, 32 in Fig. 4 dargestellt ist, werden die Fräsräder 31, 32 in unterschiedliche Drehrichtungen angetrieben.

So wird das erste Fräsrad 31, welches an der linken Seite des plattenartigen Getriebeschildes 35 gelagert ist, in eine erste Drehrichtung R1 im Uhrzeigersinn angetrieben, während das zweite Fräsrad 32 in einer entgegengesetzten zweiten Drehrichtung R2 entgegen dem Uhrzeigersinn drehend angetrieben wird. Dabei wird ein Drehmoment D, welches grundsätzlich in beide Richtungen gerichtet werden kann, über eine Antriebseinrichtung 40 von dem in Fig. 4 nicht dargestellten Antriebsmotor 41 übertragen.

Weiterhin sind an dem Gehäuse 34 des Fräskopfes 30 nicht näher dargestellte Einspritzeinrichtungen vorgesehen, wobei durch eine erste Einspritzeinrichtung im Bereich des ersten Fräsrades 31 ein Fluid in einer ersten Einspritzeinrichtung E1 etwa tangential zur ersten Drehrichtung R1 an das erste Fräsrad 31 zugeleitet wird. In entsprechender Weise wird durch eine nicht dargestellte zweite Einspritzeinrichtung im Bereich des zweiten Fräsrades 32 Fluid in einer zweiten Einspritzrichtung E2, welche etwa entgegengesetzt zur ersten Einspritzrichtung E1 ist, tangential in der zweiten Drehrichtung R2 an den Umfang des zweiten Fräsrades 32 zugeleitet.

Wie in Fig. 5 näher dargestellt ist, weist die Antriebseinrichtung 40 eine Antriebswelle 44 auf, welche drehfest mit der Welle des nicht dargestellten Antriebsmotors 41 verbunden ist. An der Antriebswelle 44 ist ein kegelförmiges Antriebsritzel 46 angeordnet, welches an seiner linken Seite mit einem ersten Kegelrad 49 einer ersten Abtriebswelle 48 kämmt. Die erste Abtriebswelle 48 treibt das erste Fräsrad 31 in der ersten Drehrichtung R1 an.

An der rechten Seite kämmt das Antriebsritzel 46 mit einem zweiten Kegelrad 51, welches drehfest mit einer zweiten Abtriebswelle 50 zum Antreiben des zweiten Fräsrades 32 in der zweiten Drehrichtung R2 verbunden ist. Die zweite Drehrichtung R2 ist entgegengesetzt zur ersten Drehrichtung R1 gerichtet, so dass durch die Antriebseinrichtung 40 mit dem Getriebe 42 über die dargestellte Kegelradverzahnung ein Eingangsdrehmoment D in einer Drehrichtung in zwei entgegengesetzte Drehrichtungen R1, R2 übersetzt wird. Vorzugsweise kann die Drehzahl an den beiden Abtriebswellen 48, 50 über ein in den jeweiligen Naben der beiden Fräsräder 31, 32 angeordnetes Untersetzungsgetriebe 54 untersetzt und so das Drehmoment an den Fräsrädern 31, 32 erhöht werden. Das vorzugsweise als Planetengetriebe ausgebildete Untersetzungsgetriebe 54 ist in den Naben der Fräsräder 31, 32 angeordnet, wie schematisch in Fig. 4 angedeutet ist. Die Abtriebswellen 48 und 50 sind achsgleich angeordnet.

## Patentansprüche

1. Verfahren zum Bearbeiten eines Bodens mit einem Fräskopf (30), welcher mittels eines Auslegerarms (20), welcher an einem Arbeitsgerät (10) angeordnet ist, durch einen Bodenbereich (5) verschwenkt wird, wobei der Fräskopf (30) ein erstes Fräsrad (31) und ein zweites Fräsrad (32) aufweist, welche um eine gemeinsame Drehachse drehend angetrieben werden,
**dadurch gekennzeichnet,**
**dass** beim Bearbeiten des Bodenbereichs (5) das erste Fräsrad (31) in eine erste Drehrichtung R1 und das zweite Fräsrad (32) in eine zweite Drehrichtung R2 angetrieben werden, welche entgegengesetzt zu der ersten Drehrichtung R1 ist.

2. Verfahren nach Anspruch 1,
**dadurch gekennzeichnet,**
**dass** während des Bearbeitens des Bodenbereichs (5) eine Zusatzmaterial in den Bodenbereich (5) eingeleitet und mit dem abgefrästen Bodenmaterial vermischt wird.

3. Verfahren nach Anspruch 2,
**dadurch gekennzeichnet,**
**dass** als Zusatzmaterial ein Fluid verwendet wird, welches im Bereich der Fräsräder (31, 32) eingeleitet wird.

4. Verfahren nach Anspruch 2 oder 3,
**dadurch gekennzeichnet,**
**dass** das Fluid im Bereich des ersten Fräsrades (31) mit einer ersten Einspritzeinrichtung eingeleitet wird, bei welcher eine erste Einspritzrichtung E1 etwa tangential an das erste Fräsrad (31) in der ersten Drehrichtung R1 gerichtet ist, und dass das Fluid im Bereich des zweiten Fräsrades (32) mit einer zweiten Einspritzeinrichtung E2 eingeleitet wird, bei welcher eine zweite Einspritzrichtung E2 etwa tangential zum zweiten Fräsrad (32) in der zweiten Drehrichtung R2 gerichtet ist.

5. Verfahren nach einem der Ansprüche 1 bis 4,
**dadurch gekennzeichnet,**
**dass** beim Bearbeiten der Fräskopf (30) in eine horizontale und eine vertikale Richtung durch den Auslegerarm (20) verschwenkt wird.

6. Fräskopf, insbesondere zum Durchführen eines Verfahrens nach einem der Ansprüche 1 bis 5, mit
- einem mittigen Gehäuse (34), an welchem an einer ersten Seite ein erstes Fräsrad (31) und an einer gegenüberliegenden Seite ein zweites Fräsrad (32) drehbar um eine gemeinsame Drehachse gelagert sind, und
- einer Antriebseinrichtung (40) zum drehenden Antreiben der Fräsräder (31, 32),
**dadurch gekennzeichnet,**
- **dass** die Antriebseinrichtung (40) ausgebildet ist, das erste Fräsrad (31) in einer ersten Drehrichtung R1 und das zweite Fräsrad (32) in einer zweiten Drehrichtung R2 anzutreiben, welche entgegengesetzt zu der ersten Drehrichtung R1 ist.

7. Fräskopf nach Anspruch 6,
**dadurch gekennzeichnet,**
**dass** die Antriebseinrichtung (40) einen gemeinsamen Antriebsmotor (41) für die beiden Fräsräder (31, 32) aufweist.

8. Fräskopf nach Anspruch 7,
**dadurch gekennzeichnet,**
**dass** der Antriebsmotor (41) als ein hydraulischer Antriebsmotor ausgebildet ist.

9. Fräskopf nach einem der Ansprüche 6 bis 8,
**dadurch gekennzeichnet,**
**dass** die Antriebseinrichtung (40) ein Getriebe (42) mit einer einzelnen Antriebswelle (44) und zwei Abtriebswellen (48, 50) aufweist, wobei ein Antriebsdrehmoment D des Antriebsmotors (41) durch das Getriebe (42) von der Antriebswelle (44) auf die beiden Abtriebswellen (48, 50) mit entgegengesetzter Drehrichtung R1, R2 aufteilbar ist.

10. Fräskopf nach einem der Ansprüche 6 bis 9,
**dadurch gekennzeichnet,**
**dass** im Bereich des ersten Fräsrades (31) mindestens eine erste Einspritzrichtung zum Einspritzen eines Fluids und im Bereich des zweiten Fräsrades (32) mindestens eine zweite Einspritzrichtung zum Einspritzen eines Fluids angeordnet sind, wobei die erste Einspritzrichtung etwa entgegengesetzt zu der zweiten Einspritzrichtung gerichtet ist.

11. Arbeitsgerät mit einem verschwenkbaren Auslegerarm,
**dadurch gekennzeichnet,**
**dass** an dem Auslegerarm (20) ein Fräskopf (30) nach einem der Ansprüche 6 bis 10 angebracht ist.

12. Arbeitsgerät nach Anspruch 11,
**dadurch gekennzeichnet,**
**dass** das Arbeitsgerät (10) einen verfahrbaren Unterwagen (12) aufweist, auf welchem ein horizontal drehbarer Oberwagen (14) mit dem Auslegerarm (20) gelagert ist.
